Europäisches Patentamt

(19) European Patent Office

Office européen des brevets

(11) Publication number: **0 029 509**

**A1**

(12) **EUROPEAN PATENT APPLICATION**

(21) Application number: **80106496.5**

(22) Date of filing: **23.10.80**

(51) Int. Cl.³: **G 01 F 1/12**
**G 01 K 17/14**

(30) Priority: **24.10.79 FI 793299**

(43) Date of publication of application:
**03.06.81 Bulletin 81/22**

(84) Designated Contracting States:
**BE CH DE FR GB IT LI NL SE**

(71) Applicant: **Seppänen, Seppo**
**Itäranta 13 E**
**SF-02100 Espoo 10(FI)**

(72) Inventor: **Seppänen, Seppo**
**Itäranta 13 E**
**SF-02100 Espoo 10(FI)**

(74) Representative: **Zipse + Habersack**
**Kemnatenstrasse 49**
**D-8000 München 19(DE)**

(54) **Measuring apparatus.**

(57) A measuring apparatus based on the flowing of liquid, gas or other similar medium, comprising a flow pipe (41), a rotor (42) placed therein and means for adjusting the flowing within the flow pipe (45, 47). The rotor axis is parallel to the main flowing direction of the medium. For measuring variables of the medium, such as heat, content etc., it has been necessary to change the rotor blade angle for example according to the temperature of the liquid to be measured. In this case, however, the rotor structure becomes heavy and the shifting of the blade angle cannot be carried out with satisfactory accuracy. This problem is solved by causing the medium to flow in a spiralling, screw-shaped or similar fashion. The movement can be expanded or contracted according to the variable to be measured, for instance according to changes in the temperature. Thus the rotor blades can be steadily installed and even straight-shaped. Now also the axial loading of the rotor can be avoided.

FIG. 8

Europäische Patentanmeldung 80106496.5    OH 14-EP
Seppo Seppänen

## MEASURING APPARATUS

The present invention relates to a measuring apparatus, the operation whereof is based on the flowing of fluid, gas or other similar medium, the said apparatus comprising a flow pipe, a rotor or equivalent placed inside the flow pipe and rotating around an axis which is parrallel to the principal flowing direction, as well as means for guiding the flow inside the flow pipe. The measuring apparatus to the invention is meant to be employed for measuring one or several variables of the medium substance, such as capacity flow, mass flow, content, composition or other similar variables.

In the previous art is known for example the liquid and heat amount meter described in the German (DE) Patent Publication no 469 669. In the said meter the flow has been divided into two components so that only one half thereof flows through the turbine. The mutual proportions between the two streams of flow are controlled by means of a heat-sensitive member. The amount of liquid flowing through the turbine is comparable to the temperature.

The drawback of the above described meter is its complex structure and consequently high production costs. Moreover, the reliability and accuracy of operation of the said apparatus is often far form satisfactory.

In the previous art are also known such heat amount meters where the whole amount of liquid flows through the turbine. As examples can be mentioned the apparatuses presented in the German Patent publications (DE-Offenlegungsschriften) no 1 931 498 and 2 010 390. In these apparatuses the influence of heat has been taken into account by changing the angle of the turbine blades. For this purpose the

turbine blades are made of a suitable bimetal. Thus a change in the temperature of the fluid flowing past the blades also changes the geometry of the blades and the rotation speed of the turbine.

The drawback of this type of meter is that owing to the metal the structure of the turbine becomes heavy. In practice the said turbines are also difficult to make to react accurately enough to the changes of temperatures. This is due to the fact that generally the changes achieved by employing a bimetal are insufficient for controlling the position of the turbine blades with the desired accuracy.

Another drawback is the fact that the slanted position of the turbine blades brings about a remarkable axial power component, which has to be received by means of bearings. This reduces not only the sensitivity of the apparatus but also its life time.

The object of the present invention is, among other things, to eliminate the above mentioned drawbacks and to create a measuring apparatus which is appropriate for measuring various different liquid and gasiform medium substances. This is achieved by means of the characteristic of the invention which are presented mainly in the Patent Claim 1.

Among the advantages of the present invention can be mentioned the following: in a measuring apparatus according to the invention the rotor is detached from the control device, and therefore it becomes possible to construct a rotor which is sensitive in its motions and a control device with a sensitive element which guides the flow accurately and works reliably. The sensitivity of the motion of the rotor is achieved by its light structure and/or the blades located in the direction of the flow (Patent Claim 3).

In the following the present invention is explained in detail with reference to the attached drawings, where

Figure 1 is an illustration of one application of the invention

Figure 2 is an illustration of another advantageous application of the invention

Figure 3 shows a detail of the apparatus of Figure 2 in a larger scale, seen in the flowing direction

Figure 4 shows the apparatus of Figure 3 in a different temperature

Figures 5-7 are schematical illustrations of the regulating device of the invention

Figure 8 is an elevation view of a third advantageous application of the invention

Figure 9 shows a detail of the apparatus of Figure 8

Figure 10 is an illustration of a fourth advantageous application of the invention in side elevation view.

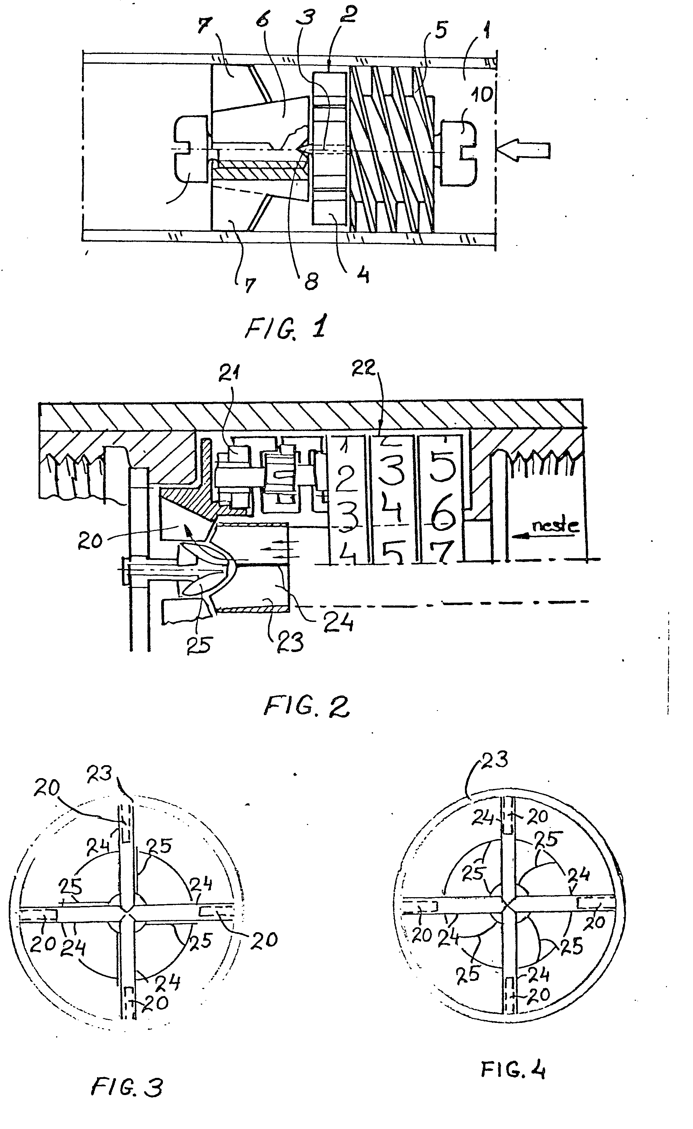

Figure 1 illustrates one advantageous application of the present invention; here the invention is presented in its simplest form. According to Figure 1, inside the flow pipe 1 there is located the rotor 2, the axis 3 whereof is parallel to the flow pipe 1. The blades 4 of the rotor 2 are parallel to the rotor axis 3. The medium substance to be measured flows in the direction of the arrow. In the flow pipe 1 is placed immediately before the rotor 2 a screw-shaped control device 5. This causes the medium to flow in a SCREWLIKE ~~spiral~~ fashion and and consequently the flow meets the rotor blades 4 at an angle which is larger than $0^{\circ}$ and thus creates a rotation torque for the rotor. The support bearing 6 of the rotor 2 is attached to the flow pipe 1 by means of the vanes 7, which do not essentially obstruct the flow. The bearing 8 can be adjusted by employing the screws 9 and 10. The speed counter of the rotor 2 is not illustrated in Figure 1. It can be arranged in several different ways, for example according to Figure 2.

4

The apparatus according to Figure 2, designed for measuring heat amount, comprises the vane wheel rotor 20, the rotating movement whereof is transferred through the intermediate gear 21 to the counting device 22. The counting device can be of a type which is generally used for example in water-meters and odometers.

The liquid, for instance warm water, flows into the counter 22 in the direction of the arrow. The flowing is stabilized by means of a sleeve 23, inside which sleeve are placed the stabilization planes 24 at cross angles. The stabilization planes are extended by attaching thereto the control vanes 25, which regulate the motion of the flowing so that it becomes more or less ~~spiral-shaped~~ *SCREW LIKE* according to the temperature. Figures 3 and 4 show the sleeve 23 seen in the flowing direction. In Figure 3 the control vanes 25 are roughly parallel to the stabilization planes 24. Here the temperature is for example 20$^o$C. Figure 4 illustrates the same situation when the temperature is for example 80$^o$C. Now the control vanes are clearly divergent from the stabilization planes 24 and thus give the flowing a screw-shaped form.

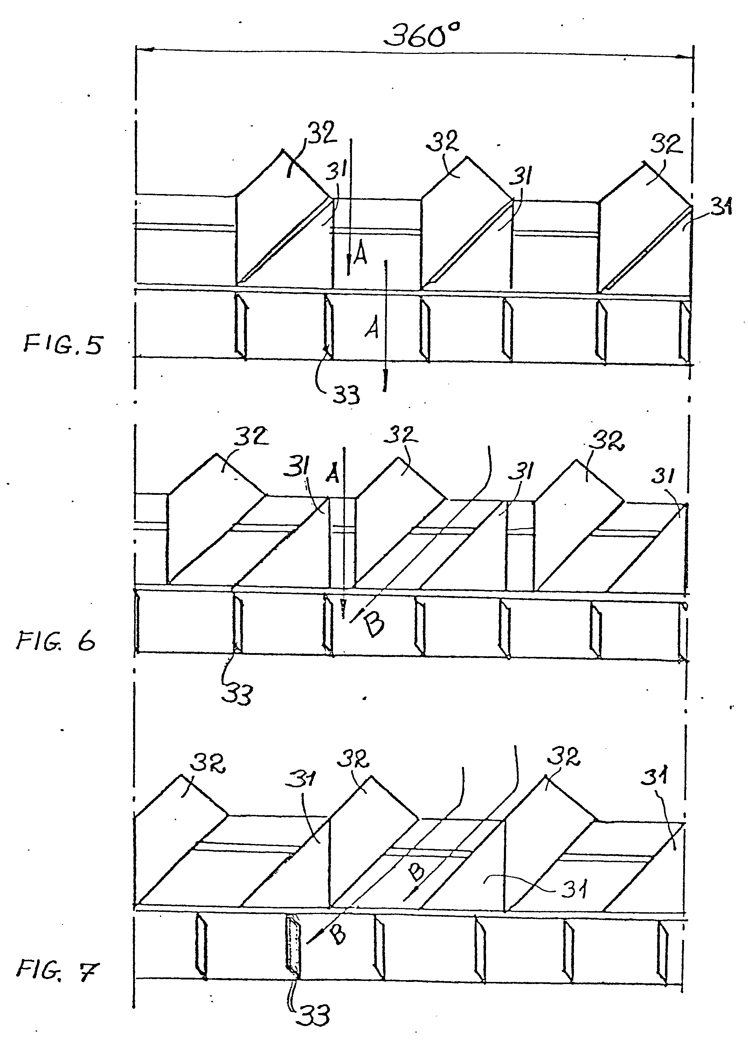

Instead of the heat-sensitive control device explained above it is also possible to employ the control device presented in Figures 5-7, which device divides the flow into two divergent flowing components. In Figures 5-7 the sheathing of the control device is spread out.

The control member consists of two elements placed on the same central axis, namely the directing member 31 and the guiding member 32, which are wound 60$^o$ with regard to each other. The mutual positions of the members 31 and 32 is determined by the impulse given by the sensitive element. This sensitive element, which is not illustrated in the figure, can be chosen separately for each measuring situation. Thus it can be a sensitive element detecting temperature, content, composition or equivalent.

0029509

5

Figure 5 illustrates a situation where the flow component B which rotates the rotor 33 is not effective. Figure 6 shows a situation where the channel for the flow component B has opened. The power of the flow component is comparable to the area of the opened, flow-refracting wall. Consequently, the rotating speed of the rotor 33 is comparable to the angle shift between the directing and the guiding members. In Figure 7 the channel of the flow component A has been closed. Now all of the flowing power is conducted through the channel B rotating the rotor 33. Thus it is evident that the flow only operates the meter, but the rotating speed of the rotor is finally determined by the message given by the sensitive element.

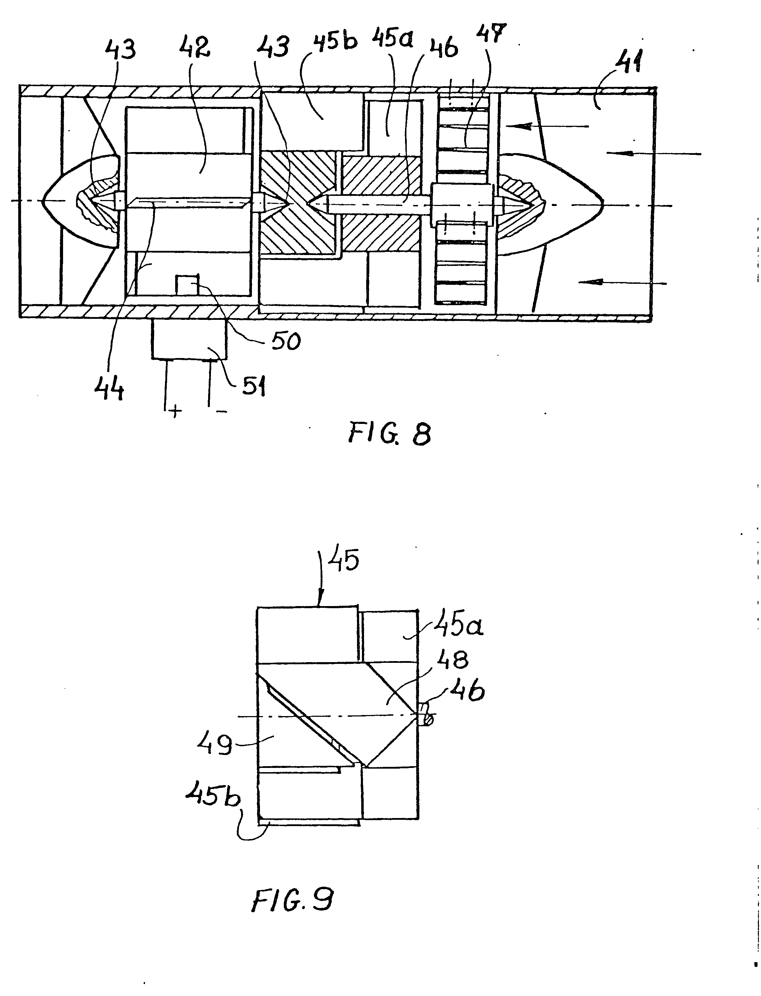

Figures 8 and 9 illustrate a preferred embodiment of the measuring apparatus according to the invention applied as a heat amount meter. According to Figure 8 the said meter comprises the flow pipe 41, wherein is placed the rotor 42 supported by the bearings 43. The rotor blades 44 are parallel to the rotor axis as well as to the principal flowing direction of the medium substance. Immediately in front of the rotor 42 there is located the control member 45, which is represented separately in Figure 9. The said control member comprises two elements 45a and 45b which can be turned around with regard to each other. The element 45a is connected by means of the axis 46 to a bimetallic spiral 47, the other end of which spiral is attached to the flow pipe 41.

When the temperature of the liquid to be measured is equivalent to the comparison level 0, the control member 45 is in the position shown in Figure 9. Now the directing member 48 and the guiding member 49 of the control member 45 are pressed against each other and the liquid flows symmetrically around the said members. Owing to this neither the rotor 42 rotates. When heat is introduced into the liquid, the bimetallic spiral 47 detects it and is wound around the element 45a by means of the axis 46. This causes the slanted channel between the guiding member 48 and the directing member 49 to open and the liquid receives a slanted motion component. This also causes the rotor to rotate. The amount of the rotation circles is counted employing the magnet 50 mounted on a rotor blade, a reed-type relay and the electric calculator 51.

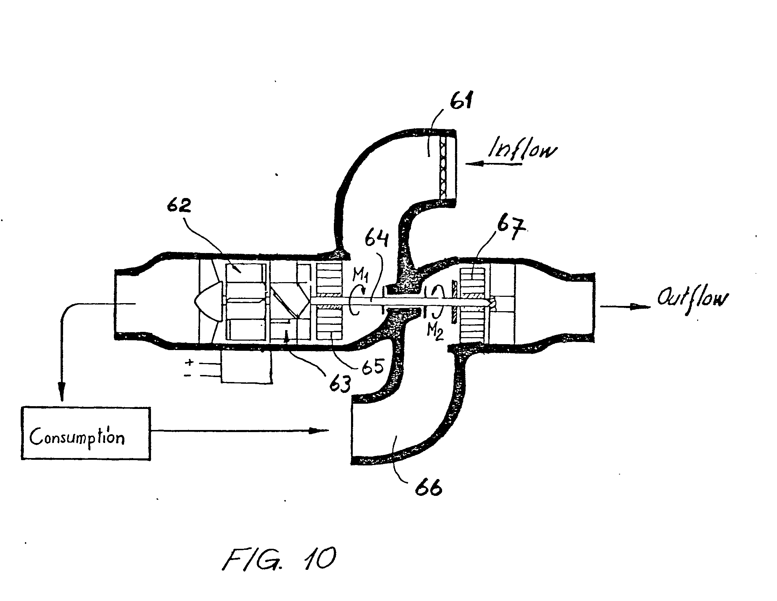

Figure 10 shows one preferred embodiment of the invention, which is applicable for use for instance as a heat consumption meter. A meter operating on the same principle can be connected to a chemical or physical process, if it is desired to measure a change in some other quality of the medium substance.

According to Figure 10 the apparatus comprises the flow pipe 61, through which the medium substance flows in as shown by the arrow. Inside the flow pipe 61 is mounted for instance the rotor 62 of Figure 8 with the attached control device 63. The control device 63 is connected to the sensitive element 65 by means of the axis 64. If the apparatus is designed for measuring heat consumption, the sensitive element 65 can be for example a bimetallic spiral as in Figure 8. If the variable to be detected is for instance content, the sensitive element 65 is consequently an element suited for this purpose, such as a supersonic bulb or equivalent. After passing by the rotor 62 the liquid (or gas) flows to the point of consumption or treatment. Therefrom the manipulated medium flows further into the flow pipe 66, which in the case of Figure 10 is located in connection with the flow pipe 61. Inside the flow pipe 66 is installed a similar sensitive element 67 as in the flow pipe 61. In the case of Figure 10 the sensitive element 67 is similar bimetallic spiral as the sensitive element number 65. The spiral 67 is connected to the same axis 64. Because the temperature of the liquid flowing in the pipe 66 is lower than that of the liquid in the pipe 61, the spiral 67 creates a counter-twist in the axis 64, which twist reduces the twist caused by the spiral 65. Thus the apparatus measures only the physical or chemical variable change taking place between the two sensitive elements.

The measuring apparatus according to the invention can be used for measuring one variable of the medium substance within one area of the control variable and another variable of the medium substance within another area of the control variable. A good example of a measuring apparatus measuring two variables of the medium substance is a meter measuring the capacity flow and heat amount of household water; this meter measures the water capacity flow up to a given water temperature Tc (for instance $10^{o}$C), whereas above this given temperature the meter measures the heat amount contained in the water. The measuring apparatus according to the invention functions in the above manner if the control device is steady up to the temperature Tc and automatically adjustable above the temperature Tc, and also if the rotor blades are in slanted position with reference to the principal                    flowing direction and the control device starts spiralling the flow only above temperature Tc.

8

CLAIMS

1. A measuring apparatus based on the flowing of liquid or gas or other similar medium comprising a flow pipe (1, 41, 61), a rotor (2, 20, 42, 62) or equivalent located within the flow pipe and rotating around an axis parallel to the principal flowing direction, as well as means for conducting the flow within the flow pipe, c h a r a c t e r i z e d in that before the rotor in the flow pipe there is installed a control device (5, 25, 45, 63), for instance a controlling blade arrangement, by which it is possible to give the flowing medium a motion component which can also be perpendicular to the principal flowing direction.

2. The measuring apparatus of Claim 1, c h a r a c t e r i z e d in that the control device (5, 25, 45) is shaped in such a manner that it causes the medium to flow in a ~~spiral fashion.~~ SCREWLike FASHION

3. The measuring apparatus of Claim 1 or 2, c h a r a c t e r i z e d in that the rotor blades (4, 44) are essentially parallel to the rotor axis.

4. The measuring apparatus of any one of the previous claims, c h a r a c t e r i z e d in that the control device (25, 45, 63) is adjustable.

5. The measuring apparatus according to Claim 4, c h a r a c t e r i z e d in that the control device (45, 63) is automatically adjusted by means of one sensitive element (47) or two sensitive elements (65, 67), which observe the physical or chemical conditions of the medium substance, for instance the temperature, content or composition thereof, etc.

6. The measuring apparatus of Claim 5, specifically applied for measuring heat consumption or equivalent, c h a r a c t e r i z e d in that there are two sensitive elements, the one of which (67) is installed to observe the temperature of the medium after it has given away heat.

7. The measuring apparatus of Claim 5, wherein the control device comprises a plurality of radially positioned control vanes, c h a r a c t e r i z e d in that each symmetrical control vane is diagonally divided preferably into two sections (31, 32, 48, 49), and that the mutual positions of the two sections with reference to each other can be changed so that at least part of the flow receives a slanted flowing direction compared to the principal flowing direction.

8. The measuring apparatus of Claim 4 applied for measuring a medium of a varying temperature, c h a r a c - t e r i z e d in that the control device (25) itself is made of such a material, for instance bimetal, that any change in the medium temperature causes a change in the shape of the control device and thus simultaneously causes an adjusting effect.

9. The measuring apparatus of Claim 5, c h a r a c t e r - i z e d in that when the medium quality to be measured falls within a given area, for example when the temperature remains under a given limit Tc, the control device (45, 63) operates in a steady fashion and while the quality to be measured falls in another area, the control device is continuously adjusted by means of the sensitive elements (47, 65, 67).

0029509

FIG. 1

FIG. 2

FIG. 3

FIG. 4

0029509

360°

**FIG. 5**

32  32  32
31  31  31
A
A
33

**FIG. 6**

32  32  32
31  A  31  31
B
33

**FIG. 7**

32  32  32
31  31
B  31
B
33

0029509

FIG. 8

FIG. 9

0029509

FIG. 10

))) European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 440 877 (Z. KOVATS) <br> * Abstract; figures 2,3,9,10,11 * <br><br>-- <br><br> US - A - 3 203 242 (D. SOURIAU) <br> * Figures; column 3, lines 4-38 * <br><br>-- <br><br> US - A - 3 439 538 (T.C. FARRELL) <br> * Abstract * <br><br>-- <br><br> FR - A - 2 348 476 (COMPTEURS SCHLUMBERGER) <br> * Figures 1-3; claims 1-9 * <br><br>-- | 1-5,8 <br><br><br> 1-5 <br><br><br> 1-5 <br><br><br> 1-6 | G 01 F 1/12 <br> G 01 K 17/14 |
| A | US - A - 1 745 913 (W. RIENKS) <br> * Figures 2,3 * <br><br>---- | 1 | TECHNICAL FIELDS SEARCHED (Int. Cl.³) <br><br> G 01 F 1/12 <br> G 01 K 17/14 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| X | The present search report has been drawn up for all claims | | |

| Place of search | Date of completion of the search | Examiner |
|---|---|---|
| The Hague | 30-01-1981 | THIBO |

EPO Form 1503.1  06.78